(19) Europäisches Patentamt
European Patent Office
Office européen des brevets

(11) Veröffentlichungsnummer : **0 156 216**
**B1**

(12) # EUROPÄISCHE PATENTSCHRIFT

(45) Veröffentlichungstag der Patentschrift : **09.09.87**

(51) Int. Cl.⁴ : **C 09 B 29/042**, D 06 P 1/18

(21) Anmeldenummer : **85102574.2**

(22) Anmeldetag : **07.03.85**

(54) **Isothiazolazofarbstoffe.**

(30) Priorität : **14.03.84 DE 3409243**

(43) Veröffentlichungstag der Anmeldung : **02.10.85 Patentblatt 85/40**

(45) Bekanntmachung des Hinweises auf die Patenterteilung : **09.09.87 Patentblatt 87/37**

(84) Benannte Vertragsstaaten : **CH DE FR GB IT LI**

(56) Entgegenhaltungen :
**EP-A- 0 087 616**
**EP-A- 0 087 677**
**EP-A- 0 135 131**
**GB-A- 2 041 391**
**Die Akte enthält technische Angaben, die nach dem Eingang der Anmeldung eingereicht wurden und die nicht in dieser Patentschrift enthalten sind.**

(73) Patentinhaber : **BASF Aktiengesellschaft**
**Carl-Bosch-Strasse 38**
**D-6700 Ludwigshafen (DE)**

(72) Erfinder : **Bergmann, Udo, Dr. Dipl.-Ing.**
**Merckstrasse 26**
**D-6100 Darmstadt (DE)**
Erfinder : **Dix, Johannes Peter, Dr.**
**Ludwigshafener Strasse 125**
**D-6708 Neuhofen (DE)**
Erfinder : **Hansen, Guenter, Dr.**
**Alwin-Mittasch-Platz 8**
**D-6700 Ludwigshafen (DE)**
Erfinder : **Schefczik, Ernst, Dr.**
**Dubliner Strasse 7**
**D-6700 Ludwigshafen (DE)**

**EP 0 156 216 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft Verbindungen der allgemeinen Formel I

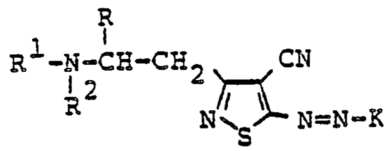

in der

R Wasserstoff, $C_1$- bis $C_4$-Alkyl oder gegebenenfalls substituiertes Phenyl,

$R^1$ Allyl, gegebenenfalls substituiertes Alkyl, Cycloalkyl oder Aryl,

$R^2$ Acyl,

$R^1$ und $R^2$ zusammen mit dem Stickstoff einen gesättigten 5- oder 6-Ring oder ein Diacylimidrest und

K der Rest einer Kupplungskomponente sind.

Reste R sind neben Wasserstoff im einzelnen z. B. Butyl, Propyl, Ethyl, Phenyl, Chlorphenyl, Methylphenyl, Methoxyphenyl oder Nitrophenyl und vorzugsweise Methyl.

Für $R^1$ kommen z. B. $C_1$- bis $C_8$-Alkyl, das noch durch Sauerstoff unterbrochen und durch $C_1$- bis $C_8$-Alkoxy, Phenoxy, Phenyl oder $C_1$- bis $C_8$-Alkanoyloxy substituiert sein kann, Cyclopentyl, Cyclohexyl, Methylcyclohexyl, Norbornyl oder gegebenenfalls durch Chlor, Methyl oder Alkoxy substituiertes Phenyl in Betracht.

Einzelne Reste $R^1$ sind neben den bereits genannten z. B.:

$CH_3$, $C_2H_5$, $C_3H_7$, $C_4H_9$, $C_6H_{13}$, $C_8H_{17}$, $C_2H_5OCH_2CH_2$,

$CH_3OCH_2CH_2CH_2$, $C_4H_9OCH_2CH_2CH_2$, $CH_3CONHCH_2CH_2$, $C_2H_5OCOCH_2$,

$CH_3OCOCHCH_3$, $C_6H_5OCH_2CH_2$, $C_6H_5OCH_2CH_2OCH_2CH_2CH_2$, $C_6H_5CH_2$,

$C_6H_5CH_2CH_2$, 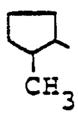 , 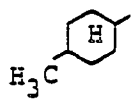 , 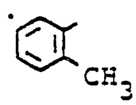 , 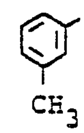 ,

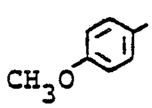 , 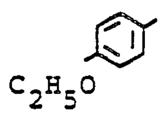 , 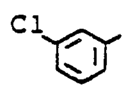 , 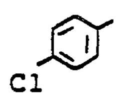

oder 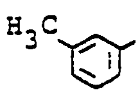 .

Bei Resten, die als Isomere auftreten können, sind sowohl die n-, i- und t-Verbindungen durch die abgekürzte Formelschreibweise erfaßt.

Für $R^2$ sind z. B. zu nennen:

$C_1$- bis $C_{10}$-Alkanoyl, das noch durch Alkoxy oder Phenoxy substituiert sein kann, Cyclohexanoyl, gegebenenfalls durch Chlor, Methyl oder Methoxy substituiertes Benzoyl, $C_1$- bis $C_8$-Alkoxycarbonyl, Aminocarbonyl, gegebenenfalls N-mono- oder N,N-disubstituiertes Aminocarbonyl oder Phenylaminocarbonyl sowie die entsprechenden Alkyl-, Aryl- oder Aminosulfonylreste.

Einzelne Acylreste $R^2$ sind beispielsweise:

$CHO$, $CH_3CO$, $CH_3OCH_2CO$, 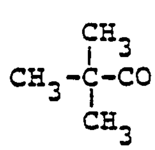 , $C_3H_7CO$, $C_7H_{15}CO$, $C_9H_{19}CO$,

$C_6H_5OCH_2CO$, $C_6H_5CH_2CO$, $C_6H_5CH{=}CH{-}CO$,

(Fortsetzung)

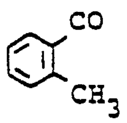 , 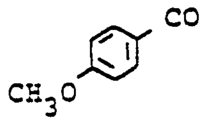 , 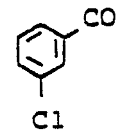 ,

$CH_3OCO$, $C_2H_5OCO$, $C_4H_9OCO$, $C_8H_{17}OCO$, $CH_3OCH_2CH_2OCO$, $CH_3NHCO$, $C_2H_5NHCO$, $C_3H_7NHCO$, $C_4H_9NHCO$, $(CH_3)_2NCO$, $CH_3SO_2$, $C_6H_5SO_2$

oder 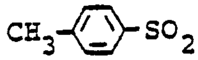 .

Für $R^1$ und $R^2$ zusammen mit dem Stickstoff sind z. B. folgende Reste zu nennen :

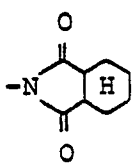 , 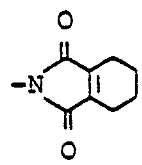 , 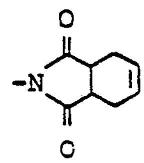 , 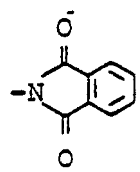 ,

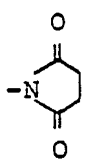 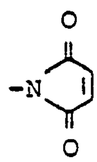 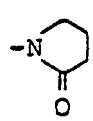 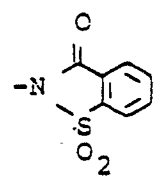 oder 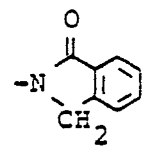

Die Kupplungskomponenten KH entstammen insbesondere der Anilin-, Naphthalin- oder heterocyclischen Reihe.

Die Kupplungskomponenten KH entsprechen insbesondere den allgemeinen Formeln

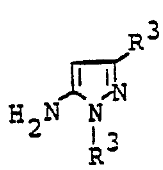 , 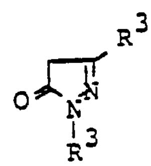 , 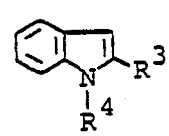

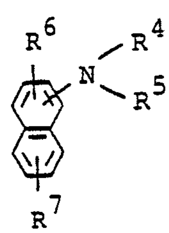 , 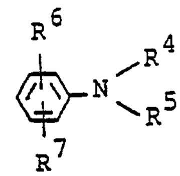 ,

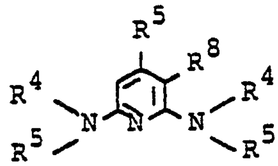 oder 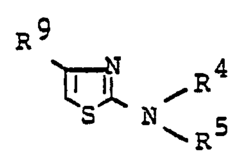

wobei

$R^3$ Wasserstoff, Alkyl, Aralkyl oder Aryl,

$R^4$ Wasserstoff oder $R^5$,
$R^5$ gegebenenfalls substituiertes Alkyl, Cycloalkyl, Alkenyl, Aralkyl oder Aryl,
$R^6$, $R^7$ Wasserstoff, Alkyl, Alkoxy, Phenoxy, Halogen, Alkylsulfonylamino, Dialkylaminosulfonylamino oder Acylamino,
$R^8$ Cyan, Carbamoyl, Nitro oder Carbalkoxy und
$R^9$ gegebenenfalls substituiertes Phenyl, Alkyl oder Aralkyl sind.

Einzelne Reste $R^3$ sind neben den bereits genannten beispielsweise Methyl, Ethyl, Propyl, Butyl, Benzyl, Phenethyl, Phenyl, o-, m-, p-Tolyl oder o-, m-, p-Chlorphenyl.

Reste $R^5$ sind neben den bereits genannten z. B. $C_1$- bis $C_6$-Alkylgruppen, die durch Chlor, Brom, Hydroxy, $C_1$- bis $C_8$-Alkoxy, Phenoxy, Cyan, Carboxy, $C_1$- bis $C_8$-Alkanoyloxy, $C_1$- bis $C_8$-Alkoxy-$C_1$-$C_4$-alkoxy, Benzoyloxy, o-, m-, p-Methylbenzoyloxy, o-, m-, p-Chlorbenzoyloxy, $C_1$- bis $C_8$-Alkoxyalkanoyloxy, Phenoxyalkanoyloxy, $C_1$- bis $C_8$-Alkoxycarbonyloxy, $C_1$- bis $C_8$-Alkoxyalkoxycarbonyloxy, benzyloxycarbonyloxy, Phenethyloxycarbonyloxy, Phenoxyethoxycarbonyloxy, $C_1$- bis $C_8$-Alkylaminocarbonyloxy, Cyclohexylaminocarbonyloxy, Phenylaminocarbonyloxy, $C_1$- bis $C_8$-Alkoxycarbonyl, $C_1$- bis $C_8$-Alkoxyalkoxycarbonyl, Phenoxycarbonyl, Benzyloxycarbonyl, Phenoxy-$C_1$-$C_4$-alkoxy oder Phenethyloxycarbonyl substituiert sein können sowie Phenyl, Benzyl, Phenylethyl oder Cyclohexyl.

Einzelne Reste $R^5$ sind z. B. Methyl, Ethyl, Propyl, Butyl, Pentyl, Hexyl, Allyl, Methallyl, 2-Chlorethyl, 2-Bromethyl, 2-Cyanethyl, 2-Hydroxyethyl, 2-Phenyl-2-hydroxyethyl, 2,3-Dihydroxypropyl, 2-Hydroxypropyl, 2-Hydroxybutyl, 2-Hydroxy-3-phenoxypropyl, 2-Hydroxy-3-methoxypropyl, 2-Hydroxy-3-butoxypropyl, 3-Hydroxypropyl, 2-Methoxyethyl, 2-Ethoxyethyl, 2-Propoxyethyl, 2-Butoxyethyl, 2-Phenoxyethyl, 2-Phenoxypropyl, 2-Acetoxyethyl, 2-Propionyloxyethyl, 2-Butyryloxyethyl, 2-Isobutyryloxyethyl, 2-Methoxymethylcarbonyloxyethyl, 2-Ethoxymethylcarbonyloxyethyl, 2-Phenoxymethylcarbonyloxyethyl, 2-Methoxycarbonyloxyethyl, 2-Ethoxycarbonyloxyethyl, 2-Propoxycarbonyloxyethyl, 2-Butoxycarbonyloxyethyl, 2-Phenyloxycarbonyloxyethyl, 2-Benzyloxycarbonyloxyethyl, 2-Methoxyethoxycarbonyloxyethyl, 2-Ethoxyethoxycarbonyloxyethyl, 2-Propoxyethoxycarbonyloxyethyl, 2-Butoxyethoxycarbonyloxyethyl, 2-Methylaminocarbonyloxyethyl, 2-Ethylaminocarbonyloxyethyl, 2-Propylaminocarbonyloxyethyl, 2-Butylaminocarbonyloxyethyl, 2-Methoxycarbonylethyl, 2-Ethoxycarbonylethyl, 2-Propoxycarbonylethyl, 2-Butoxycarbonylethyl, 2-Phenoxycarbonylethyl, 2-Benzyloxycarbonylethyl, 2-β-Phenylethoxycarbonylethyl, 2-Methoxyethoxycarbonylethyl, 2-Ethoxyethoxycarbonylethyl, 2-Propoxyethoxycarbonylethyl, 2-Butoxyethoxycarbonylethyl, 2-Phenoxyethoxycarbonylethyl oder 2-Benzoylethyl.

Als Reste $R^6$ und $R^7$ kommen beispielsweise Wasserstoff, Methyl, Ethyl, Propyl, Brom, Chlor, Methoxy, Ethoxy, Phenoxy, Benzyloxy, $C_1$- bis $C_6$-Alkanoylamino, Benzylamine sowie $C_1$- bis $C_4$-Alkylsulfonylamino oder -Dialkylaminosulfonylamino in Betracht.

Reste $R^8$ sind neben den bereits genannten z. B. Aminocarbonyl, Methylaminocarbonyl, Dimethylaminocarbonyl, Ethylaminocarbonyl, Diethylaminocarbonyl, Methoxycarbonyl, Ethoxycarbonyl, n- und i-Propoxycarbonyl, n-, i- und sek.-Butoxycarbonyl, Methoxyethoxycarbonyl, Ethoxyethoxycarbonyl, n- und i-Propoxyethoxycarbonyl oder n-, i- und sek.-Butoxyethoxycarbonyl.

Reste $R^9$ sind beispielsweise durch $C_1$- bis $C_{10}$-Alkyl, $C_1$- bis $C_{10}$-Alkoxy, Phenoxy, Benzyloxy, Phenyl, Chlor, Brom, Nitro, $C_1$- bis $C_4$-Alkoxycarbonyl, $C_1$- bis $C_4$-Mono- oder Dialkylamino, $C_1$- bis $C_4$-Alkoxy-ethoxy, $C_1$- bis $C_4$-Alkyl- oder Phenylmercapto, $C_1$- bis $C_4$-Alkoxy-ethoxy, $C_1$- bis $C_4$-Alkyl- oder Phenylmercapto, $C_1$- bis $C_5$-Alkanoylamino, wie Acetylamino, Propionylamino, Butyrylamino oder Valerylamino, ein- oder mehrfach substituiertes Phenyl, $C_1$- bis $C_4$-Alkyl, $C_1$- bis $C_4$-Alkoxycarbonylmethyl, Cyanmethyl oder Benzyl.

Die Verbindungen der Formel I ergeben gelbe bis blaue Farbtöne und eignen sich insbesondere zum Färben von Polyestern, Polyamiden, Celluloseestern und Mischgeweben aus Polyestern und Cellulosefasern. Man erhält Färbungen mit in der Regel guten Echtheiten insbesondere auf Polyestern.

Zur Herstellung der Verbindungen der Formel kann man Diazoniumverbindungen von Aminen der Formel

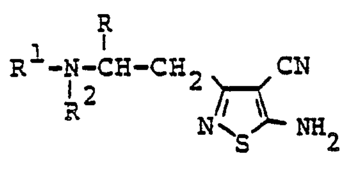

nach an sich üblichen Methoden mit Kupplungskomponenten der Formel

KH

umsetzen.

Einzelheiten der Herstellung können den Beispielen entnommen werden, in denen sich Angaben über Teile und Prozente, sofern nicht anders vermerkt, auf das Gewicht beziehen.

Von besonderer Bedeutung sind Verbindungen der Formel Ia

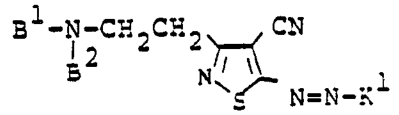

in der
$B^1$ $C_1$- bis $C_8$-Alkyl,
$B^2$ ein Acylrest und
$K^1$ ein Rest einer Kupplungskomponente der Anilin- oder Thiazolreihe sind.

Als bevorzugte Kupplungskomponenten $K^1H$ seien die folgenden aufgeführt :

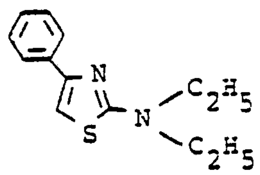 , 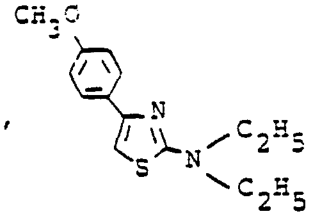

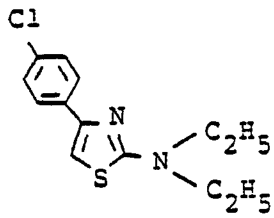 , 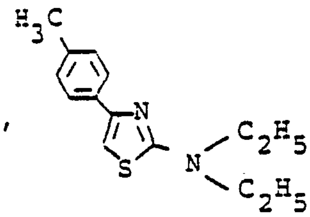

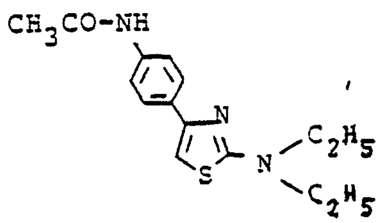 , 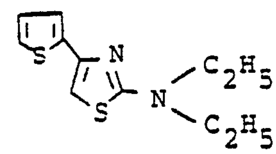

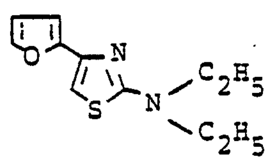 , 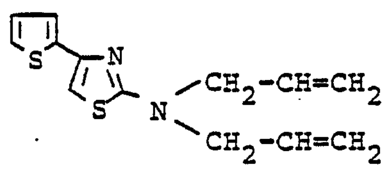

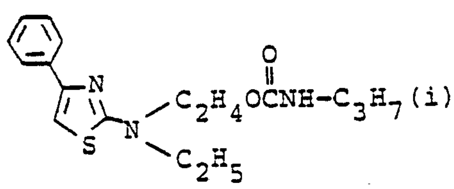 ,

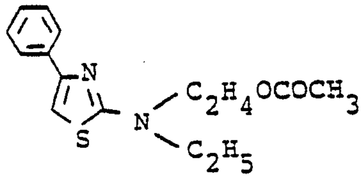 , 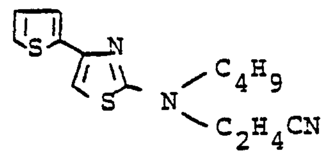

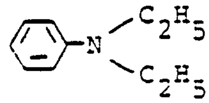 , 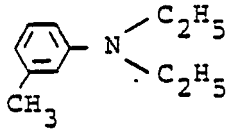 ,

(Fortsetzung)

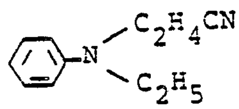 , 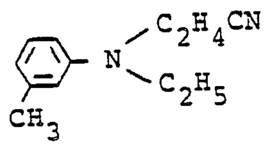 ,

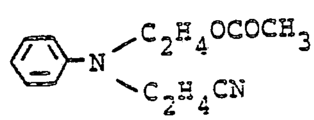 , 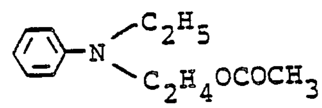

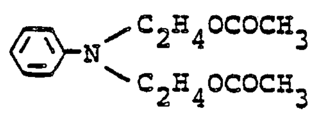 , 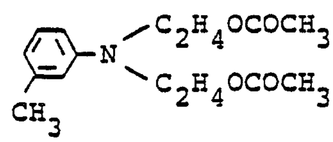

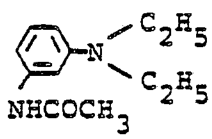 , 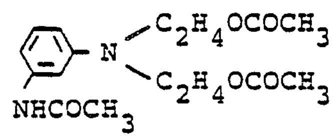

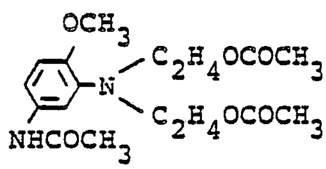 , 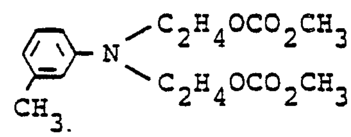

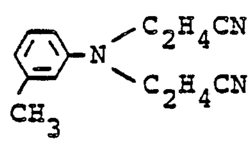 , 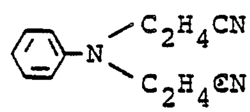

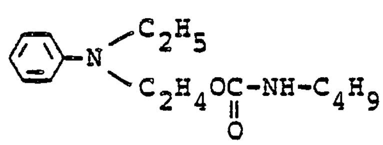 , 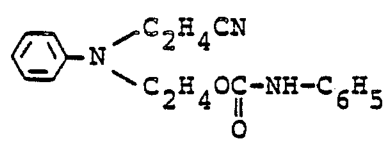

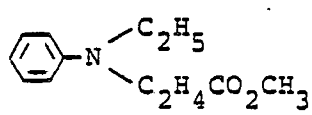 , 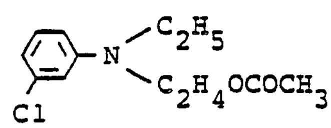

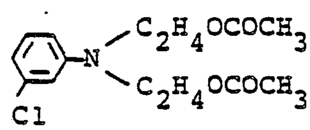 ,

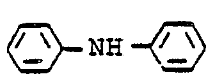 , 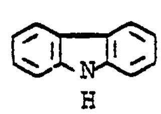 ,

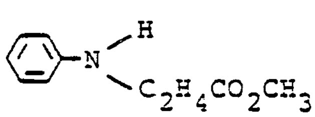 , 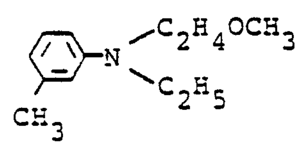

(Fortsetzung)

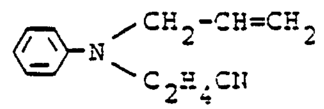 ,

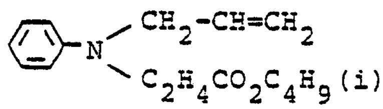 , 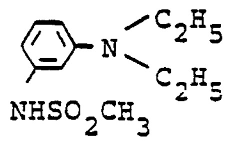 ,

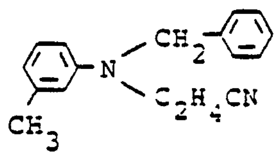 , 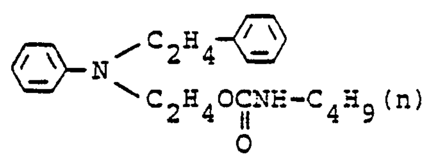 oder

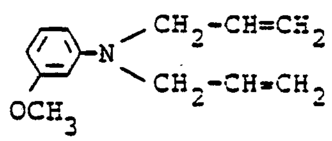 .

Beispiel 1

11,9 Teile 5-Amino-4-cyan-3-β-[N,N-acetyl-ethyl-amino]-ethylisothiazol wurden in 75 Raumteilen eines Gemisches aus 17 Teilen Eisessig und 3 Teilen Propionsäure gelöst. Nach Zugabe von 20 Teilen 85 %iger Schwefelsäure ließ man bei 0-5 °C unter Rühren langsam 16 Teile Nitrosylschwefelsäure (11,5 % $N_2O_3$) zulaufen und 4 Stunden bei gleicher Temperatur rühren. Die so erhaltene Diazoniumsalzlösung ließ man in eine Mischung aus 12,8 Teilen 4-Phenyl-2-(N-diallylamino)-thiazol, 20 Teilen Essigsäure, 250 Teilen Wasser, 250 Teilen Eis und einem Teil Amidosulfonsäure langsam einfließen. Nach Beendigung der Kupplung wurde der Farbstoff abgesaugt, neutral gewaschen und bei 50 °C im Vakuum getrocknet. Man erhielt 18,0 Teile des Farbstoffs der Formel

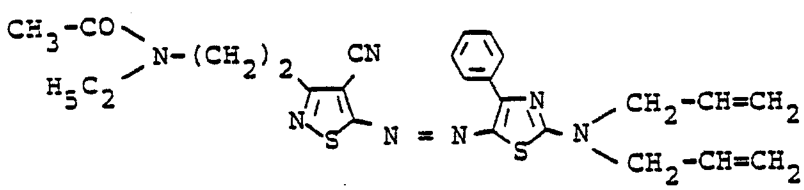

der Polyester in farbstarken violetten Nuancen von hoher Licht- und Thermofixierechtheit färbt.

Analog Beispiel 1 erhält man auch die in der folgenden Tabelle durch Diazo- und Kupplungskomponenten gekennzeichneten Farbstoffe.

(Siehe Tabellen Seiten 8 ff.)

| Bsp. | Diazokomponente | Kupplungskomponente | Farbton auf Polyester |
|---|---|---|---|
| 2 | 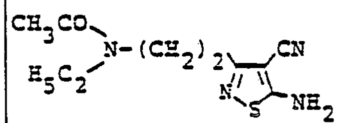 | 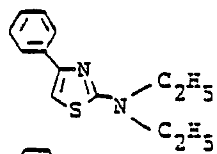 | violett |
| 3 | " | 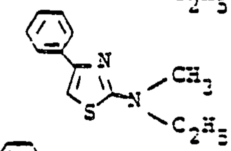 | violett |
| 4 | " | 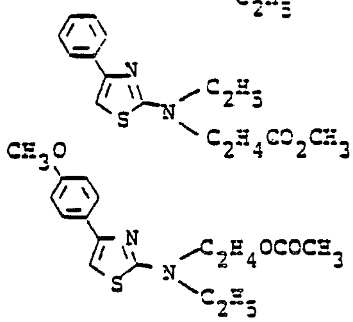 | violett |
| 5 | " | | marine-blau |
| 6 | " | 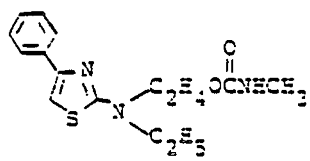 | blau |
| 7 | " | 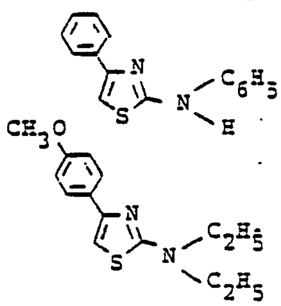 | blau |
| 8 | " | | blau |

(Fortsetzung)

| Bsp. | Diazokomponente | Kupplungskomponente | Farbton auf Polyester |
|---|---|---|---|
| 9 | 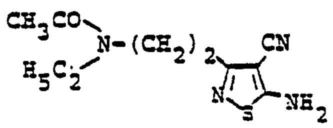 | 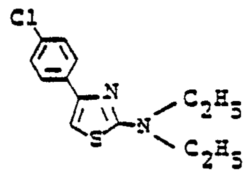 | blau |
| 10 | " | 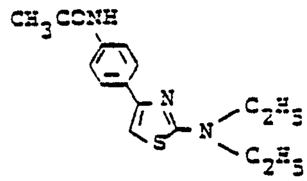 | blau |
| 11 | 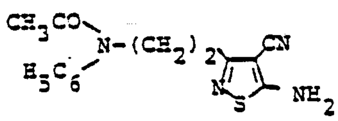 | 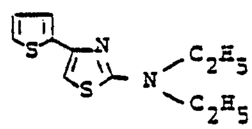 | blau |
| 12 | " | 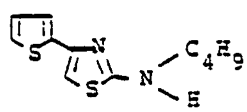 | blau |
| 13 | " | 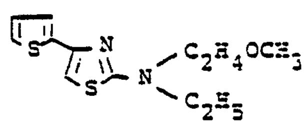 | blau |
| 14 | " | 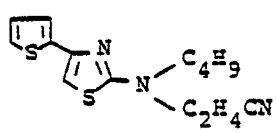 | blau |
| 15 | " | 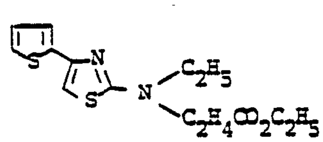 | blau |
| 16 | " | 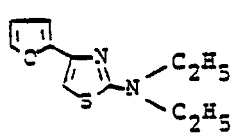 | marine-blau |

(Fortsetzung)

| Bsp. | Diazokomponente | Kupplungskomponente | Farbton auf Polyester |
|---|---|---|---|
| 17 | 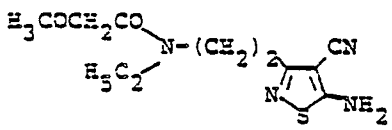 | 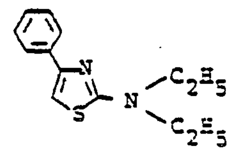 | violett |
| 18 | 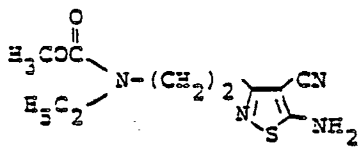 | 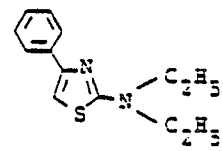 | violett |
| 19 | 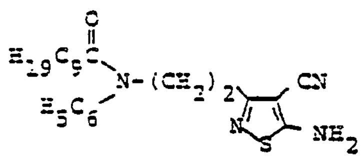 | " | violett |
| 20 | 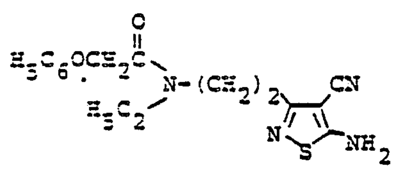 | " | violett |
| 21 | 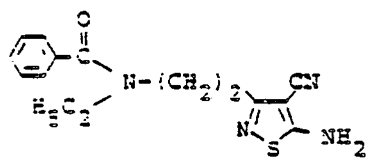 | 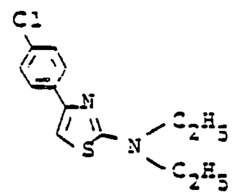 | marine-blau |
| 22 | 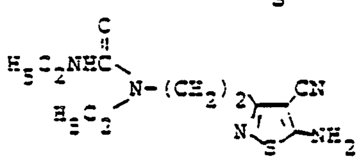 | " | marine-blau |
| 23 | 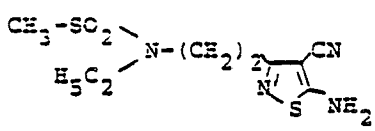 | " | marine-blau |

(Fortsetzung)

| Bsp. | Diazokomponente | Kupplungskomponente | Farbton auf Polyester |
|---|---|---|---|
| 24 | 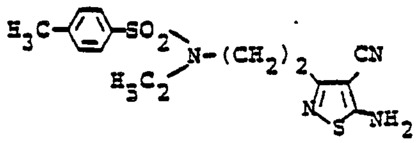 | 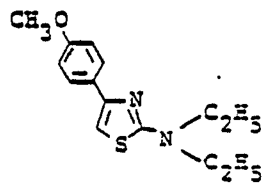 | blau |
| 25 | 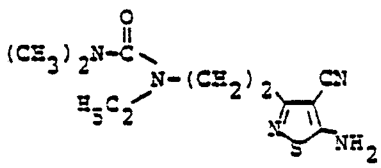 | " | blau |
| 26 | 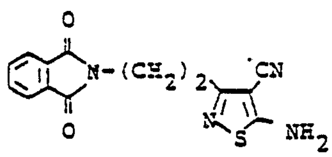 | " | blau |
| 27 | 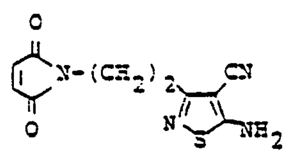 | 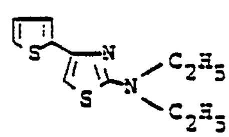 | blau |
| 28 | 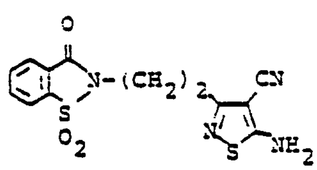 | " | blau |
| 29 | 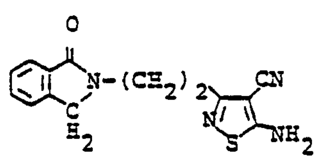 | " | blau |

(Fortsetzung)

| Bsp. | Diazokomponente | Kupplungskomponente | Farbton auf Polyester |
|---|---|---|---|
| 30 | 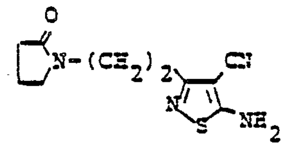 | 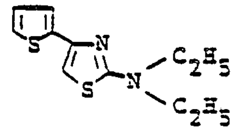 | blau |
| 31 | 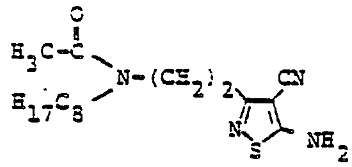 | " | blau |
| 32 | 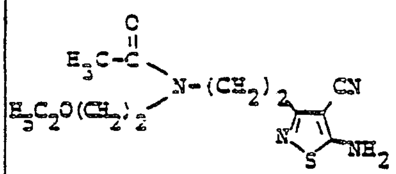 | " | blau |
| 33 | 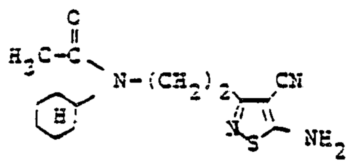 | " | blau |

Beispiel 34

5,0 Teile 5-Amino-4-cyan-3-(2'-N-ethyl-N-propionyl-amino)-ethyl-isothiazol wurden in einer Mischung aus 22,5 Volumenteilen Essigsäure und 7,5 Volumenteilen Propionsäure verrührt. Nach Zugabe von 10 Volumenteilen 85 %iger Schwefelsäure ließ man bei 0-5 °C unter Rühren langsam 6,4 Teile Nitrosylschwefelsäure (11,5 % $N_2O_3$) zulaufen und 4 Stunden bei gleicher Temperatur rühren. Die so erhaltene Diazoniumsalzlösung ließ man in eine Lösung von 3,9 Teilen N-Cyanethyl-N-ethyl-m-toluidin in einer Mischung aus 50 Teilen Wasser, 200 Teilen Eis, 10 Volumenteilen 32 %iger Salzsäure, 20 Volumenteilen Dimethylformamid und 0,5 Teilen Amidosulfonsäure langsam einfließen. Nach Beendigung der Kupplung wurde der Farbstoff abgesaugt, neutral gewaschen und getrocknet. Man erhielt 9,2 Teile des Farbstoffs der Formel

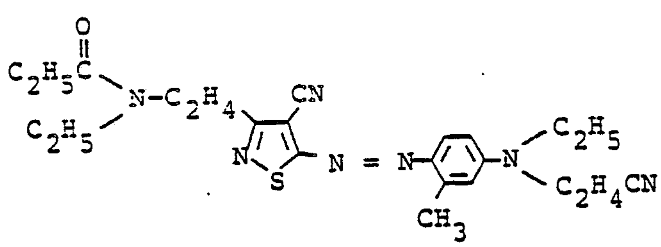

der Polyesterfasern in klaren blaustichig roten Nuancen mit guten Echtheiten färbt.

Analog ließen sich folgende Verbindungen herstellen.

| Bsp. | Diazokomponente | Kupplungskomponente | Farbton auf Polyester |
|---|---|---|---|
| 35 | 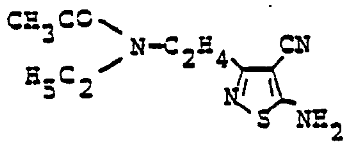 | 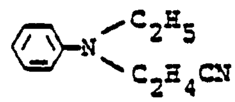 | rot |
| 36 | " | 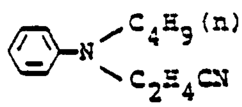 | rot |
| 37 | " | 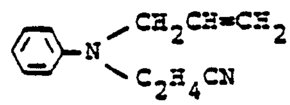 | rot |
| 38 | " | 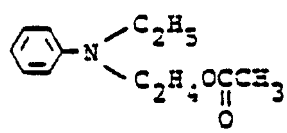 | rot |
| 39 | " | 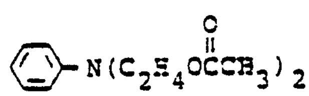 | rot |
| 40 | " | 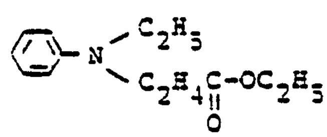 | rot |
| 41 | " | 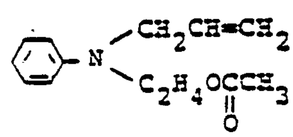 | rot |
| 42 | " | 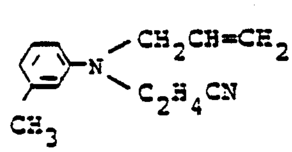 | rot |

(Fortsetzung)

| Bsp. | Diazokomponente | Kupplungskomponente | Farbton auf Polyester |
|---|---|---|---|
| 43 | 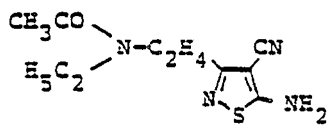 | 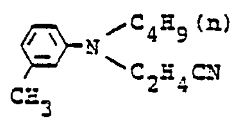 | rot |
| 44 | " | 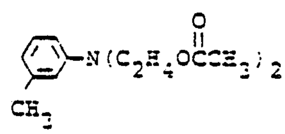 | rot |
| 45 | " | 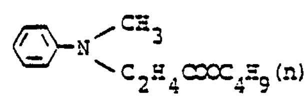 | rot |
| 46 | " | 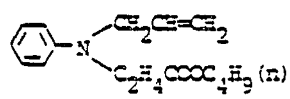 | rot |
| 47 | " | 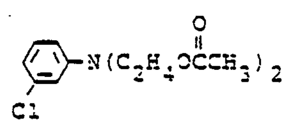 | rot |
| 48 | " | 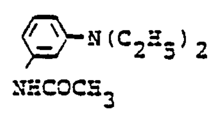 | rot-violett |
| 49 | " | 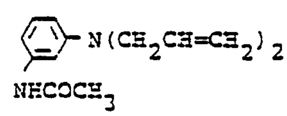 | rot-violett |
| 50 | " | 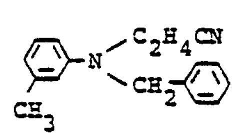 | rot |

(Fortsetzung)

| Bsp. | Diazokomponente | Kupplungskomponente | Farbton auf Polyester |
|---|---|---|---|
| 51 | 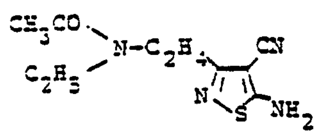 | 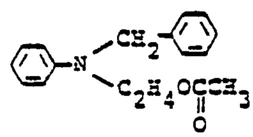 | rot |
| 52 | " | 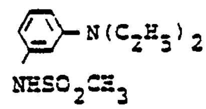 | rot-violett |
| 53 | " | 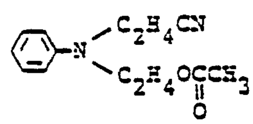 | rot |
| 54 | " | 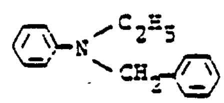 | rot |
| 55 | 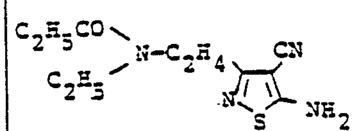 | 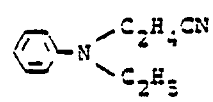 | rot |
| 56 | " | 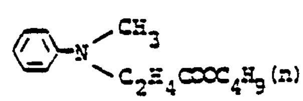 | rot |
| 57 | " | 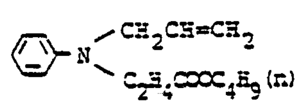 | rot |
| 58 | " | 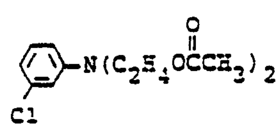 | rot |

(Fortsetzung)

| Bsp. | Diazokomponente | Kupplungskomponente | Farbton auf Polyester |
|---|---|---|---|
| 59 | 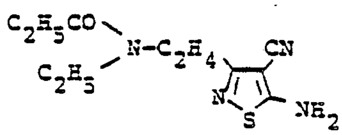 | 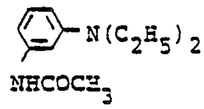 | rot-violett |
| 60 | " | 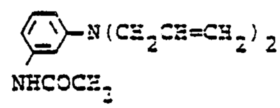 | rot-violett |
| 61 | " | 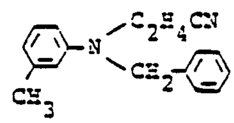 | rot |
| 62 | " | 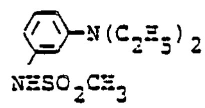 | rot-violett |
| 63 | " | 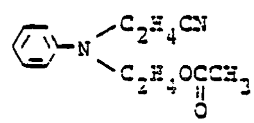 | rot |
| 64 | " | 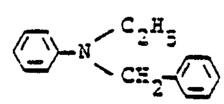 | rot |
| 65 | " | 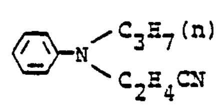 | rot |
| 66 | " | 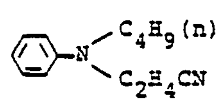 | rot |

(Fortsetzung)

| Bsp. | Diazokomponente | Kupplungskomponente | Farbton auf Polyester |
|---|---|---|---|
| 67 | 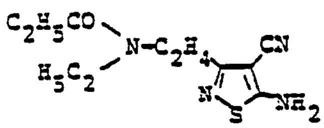 | 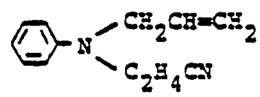 | rot |
| 68 | " | 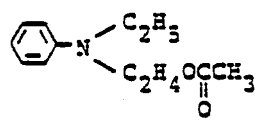 | rot |
| 69 | " | 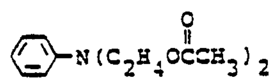 | rot |
| 70 | " | 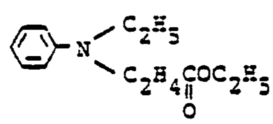 | rot |
| 71 | " | 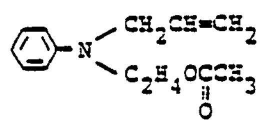 | rot |
| 72 | " | 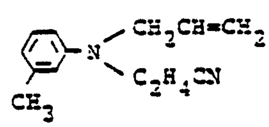 | rot |
| 73 | " | 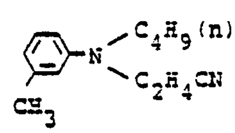 | rot |
| 74 | " | 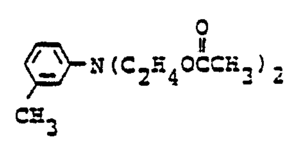 | rot |

(Fortsetzung)

| Bsp. | Diazokomponente | Kupplungskomponente | Farbton auf Polyester |
|---|---|---|---|
| 75 | 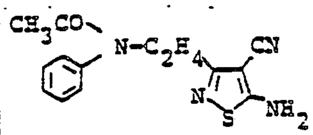 | 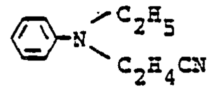 | rot |
| 76 | " | 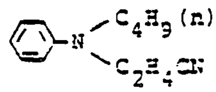 | rot |
| 77 | " | 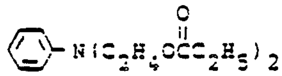 | rot |
| 78 | " | 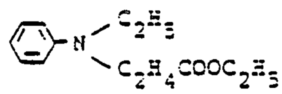 | rot |
| 79 | " | 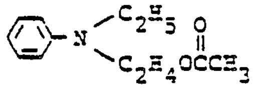 | rot |
| 80 | " | 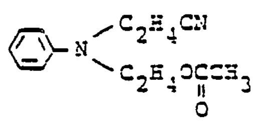 | rot |
| 81 | " | 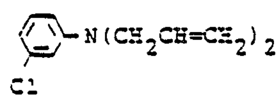 | rot |
| 82 | " | 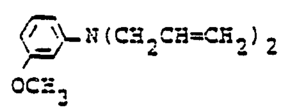 | rot |
| 83 | " | 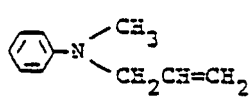 | rot |
| 84 | " | 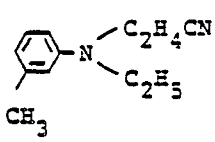 | rot |
| 85 | " | 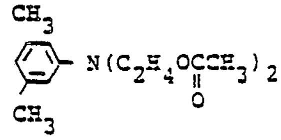 | rot |

(Fortsetzung)

| Bsp. | Diazokomponente | Kupplungskomponente | Farbton auf Polyester |
|---|---|---|---|
| 86 | 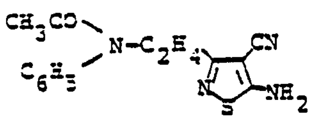 | 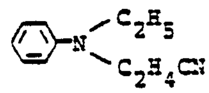 | rot |
| 87 | " | 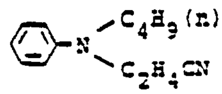 | rot |
| 88 | " | 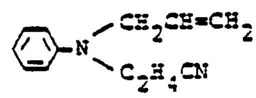 | rot |
| 89 | " | 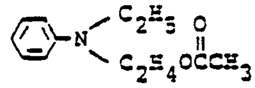 | rot |
| 90 | " | 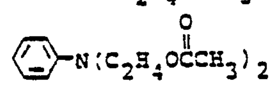 | rot |
| 91 | " | 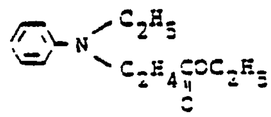 | rot |
| 92 | " | 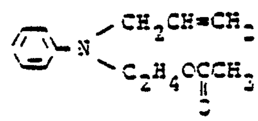 | rot |
| 93 | " | 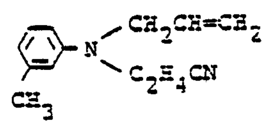 | rot |
| 94 | " | 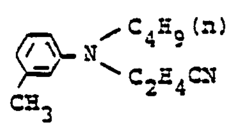 | rot |
| 95 | " | 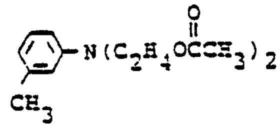 | rot |

(Fortsetzung)

| Bsp. | Diazokomponente | Kupplungskomponente | Farbton auf Polyester |
|---|---|---|---|
| 96 | 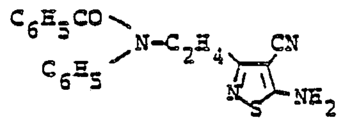 | 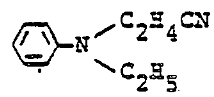 | rot |
| 97 | 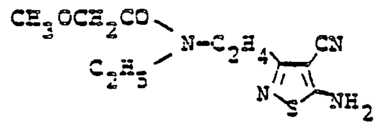 | " | rot |
| 98 | 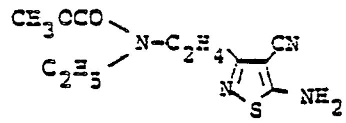 | " | rot |
| 99 | 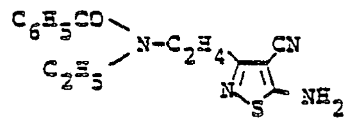 | " | rot |
| 100 | 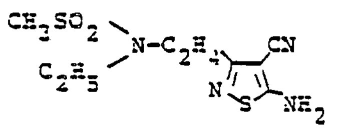 | " | rot |
| 101 | 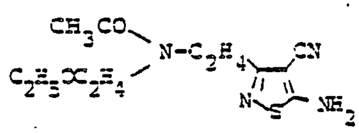 | " | rot |
| 102 | 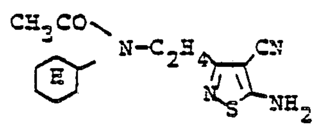 | " | rot |

## Beispiel 103

6 Teile 5-Amino-4-cyan-3-[2-(N-acetyl-N-ethylamino)-ethyl]-isothiazol wurden in 35 Teile Eisessig/Propionsäure (3 : 1) eingetragen. Nach Zugabe von 15 Teilen 85 %iger Schwefelsäure wurden bei 0-5 °C 8 Teile Nitrosylschwefelsäure (11,5 % $N_2O_3$) zugetropft. Man liez 4 Stunden bei 0-5 °C nachrühren.

6,6 Teile N-Ethyl-N-(2-propylaminocarbonyloxy)-ethyl-m-toluidin wurden in 10 Raumteilen 30 %iger Salzsäure, 0,3 Teilen eines Fettalkoholethoxylats und 120 Teilen Wasser suspendiert. Nach Zugabe von 130 Teilen Wasser suspendiert. Nach Zugabe von 130 Teilen Eis ließ man die Diazoniumsalzlösung zulaufen. Nach beendeter Kuplung wurde die erhaltene Farbstoffsuspension filtriert, der Filterkuchen mit Wasser neutral gewaschen und bei 50 °C i. Vak. getrocknet. Es wurden 8 Teile des Farbstoffs der Formel

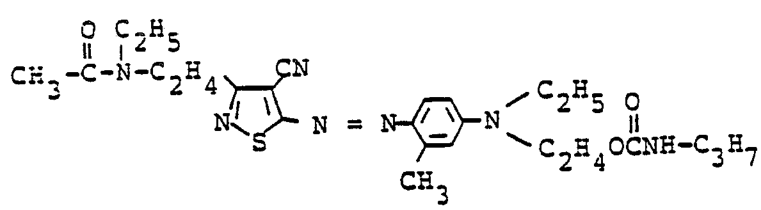

erhalten, der Polyester in klaren violetten Nuancen färbt.

D — N = N — K

| Bsp. | Diazokomponente | Kupplungskomponente | Farbton auf Polyester |
|---|---|---|---|
| 104 | 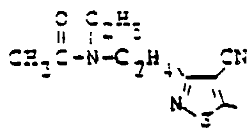 | 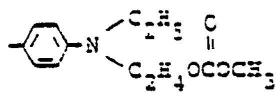 | rot |
| 105 | " | 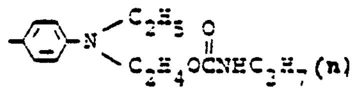 | rot |
| 106 | " | 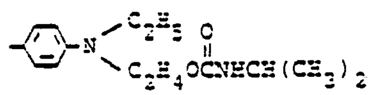 | rot |
| 107 | " | 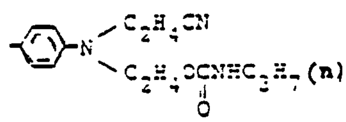 | rot |
| 108 | " | 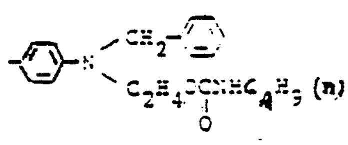 | rot |
| 109 | " | 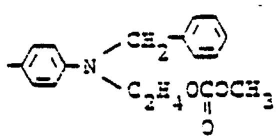 | rot |
| 110 | " | 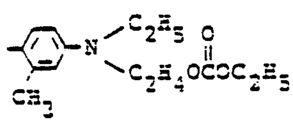 | rot |
| 111 | " | 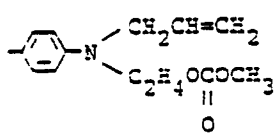 | rot |
| 112 | " | 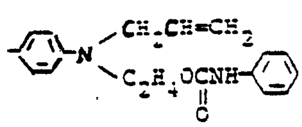 | rot |

(Fortsetzung)

| Bsp. | Diazokomponente | Kupplungskomponente | Farbton auf Polyester |
|---|---|---|---|
| 113 | 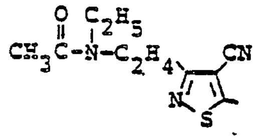 | 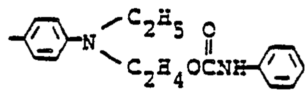 | rot |
| 114 | " | 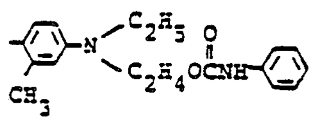 | violett |
| 115 | 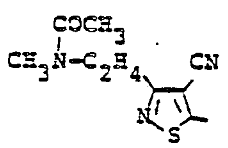 | 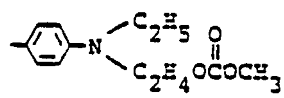 | rot |
| 116 | " | 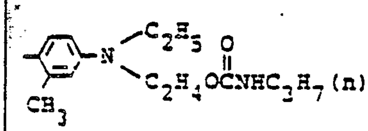 | violett |
| 117 | 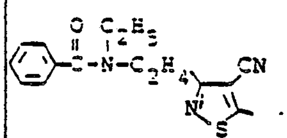 | 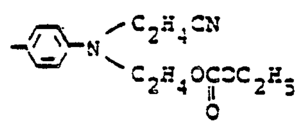 | rot |
| 118 | " | 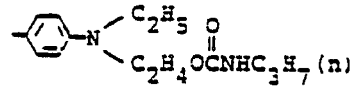 | rot |
| 119 | " | 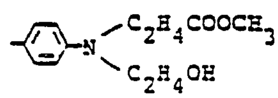 | rot |
| 120 | " | 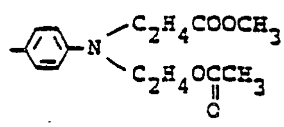 | rot |

(Fortsetzung)

| Bsp. | Diazokomponente | Kupplungskomponente | Farbton auf Polyester |
|---|---|---|---|
| 121 | 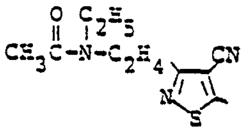 | 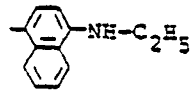 | blau |
| 122 | " | 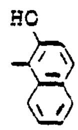 | rot |
| 123 | " | 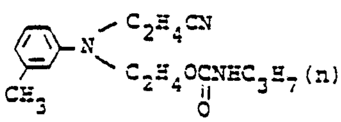 | rot |
| 124 | " | 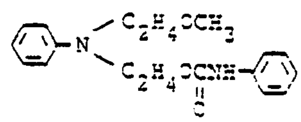 | rot |

**Patentansprüche**

1. Verbindungen der allgemeinen Formel I

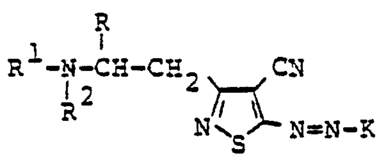

in der

R Wasserstoff, $C_1$-bis $C_4$-Alkyl oder gegebenenfalls substituiertes Phenyl,
$R^1$ Allyl, gegebenenfalls substituiertes Alkyl, Cycloalkyl oder Aryl
$R^2$ Acryl,
$R^1$ und $R^2$ zusammen mit dem Stickstoff einen gesättigten 5- oder 6-Ring oder ein Diacylimidrest und
K der Rest einer Kupplungskomponente sind.

2. Verbindungen gemäß Anspruch 1; wobei KH den Formeln

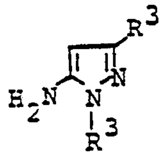 , 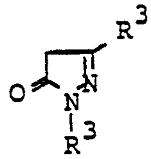 , 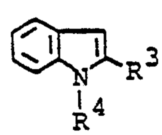

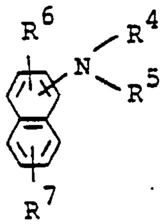 , 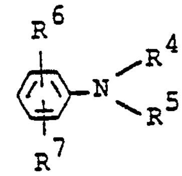 ,

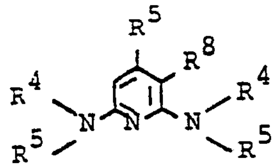

oder

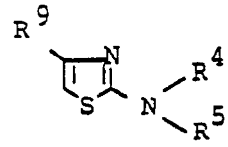

entspricht, in denen

$R^3$ Wasserstoff, Alkyl, Aralkyl oder Aryl,

$R^4$ Wasserstoff oder $R^5$,

$R^5$ gegebenenfalls substituiertes Alkyl, Cycloalkyl, Alkenyl, Aralkyl oder Aryl,

$R^6$, $R^7$ Wasserstoff, Alkyl, Alkoxy, Phenoxy, Halogen, Alkylsulfonylamino, Dialkylaminosulfonylamino oder Acylamino,

$R^8$ Cyan, Carbamoyl, Nitro oder Carbalkoxy und

$R^9$ gegebenenfalls substituiertes Phenyl, Alkyl oder Ar-alkyl sind.

3. Verwendung der Verbindungen gemäß Anspruch 1 zum Färben von Textilfasern.

**Claims**

1. A compound of the general formula I

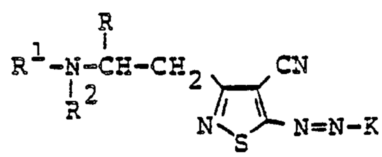

where

R is hydrogen, $C_1$-$C_4$-alkyl or unsubstituted or substituted phenyl,

$R^1$ is allyl, unsubstituted or substituted alkyl, cyclo alkyl or aryl,

$R^2$ is acyl,

$R^1$ and $R^2$, together with the nitrogen, form a saturated 5-membered or 6-membered ring or a diacylimide radical, and

K is a radical of a coupling component.

2. A compound as claimed in claim 1, wherein KH is of the formula

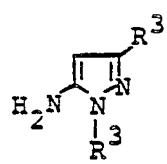

,

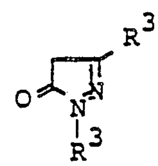

,

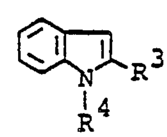

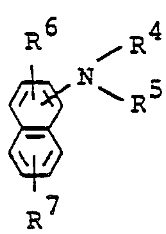

,

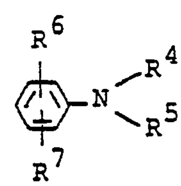

,

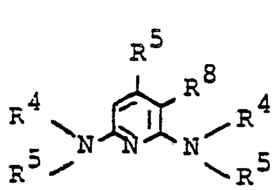

or

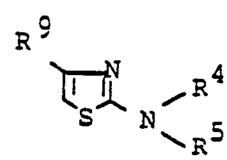

where

$R^3$ is hydrogen, alkyl, aralkyl or aryl,

$R^4$ is hydrogen or $R^5$,

$R^5$ is unsubstituted or substituted alkyl, cycloalkyl, alkenyl, aralkyl or aryl,

$R^6$ and $R^7$ are each hydrogen, alkyl, alkoxy, phenoxy, halogen, alkylsulfonylamino, dialkylaminosulfonylamino or acylamino,

$R^8$ is cyano, carbamyl, nitro or carbalkoxy, and

$R^9$ is unsubstituted or substituted phenyl, alkyl or aralkyl.

3. The use of a compound as claimed in claim 1 for dyeing textile fibres.

**Revendications**

1. Composés de formule générale I

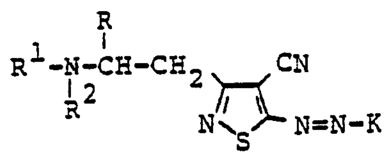

dans laquelle

R est un atome d'hydrogène, un radical alkyle en $C_1$ à $C_4$ ou un radical phényle éventuellement substitué,

$R^1$ est un radical allyle, ou un radical éventuellement substitué alkyle, cyclo-alkyle ou aryle,

$R^2$ est un radical acyle,

$R^1$ et $R^2$ forment, conjointement avec l'atome d'azote, un noyau pentagonal ou hexagonal saturé ou un radical diacylimide et

K est le radical d'un composant de copulation.

2. Composés selon la revendication 1, dans lesquels KH répond aux formules

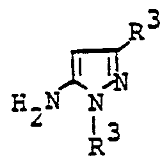 , 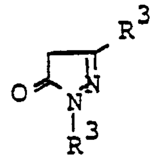 , 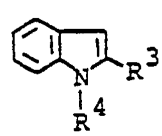

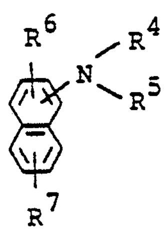 , 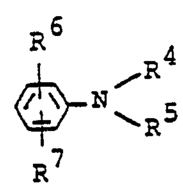 ,

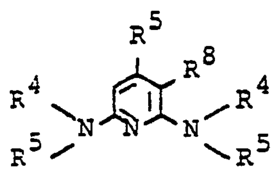 ou 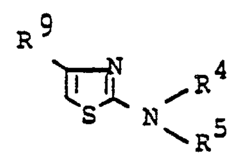

dans lesquelles

$R^3$ est un atome d'hydrogène, un radical alkyle, aralkyle ou aryle,

$R^4$ est un atome d'hydrogène ou $R^5$,

$R^5$ est un radical alkyle, cyclo-alkyle, alcényle, aralkyle ou aryle, ces radicaux étant éventuellement substitués.

$R^6$, $R^7$ sont chacun un atome d'hydrogène, un radical alkyle, alcoxy, phénoxy, un atome d'halogène, un groupement alkylsulfonylamino, dialkylaminosulfonylamino ou acylamino,

$R^8$ est un radical cyano, carbamoyle, nitro ou carbalcoxy et

$R^9$ est un radical phényle, alkyle ou aralkyle, ces radicaux étant éventuellement substitués.

3. Utilisation des composés selon la revendication 1 pour la teinture de fibres textiles.